# EUROPEAN PATENT SPECIFICATION

(11) **EP 3 152 892 B1**
(45) Date of publication and mention of the grant of the patent: **04.03.2020**
(21) Application number: 14731183.1
(22) Date of filing: 06.06.2014
(51) Int. Cl.: H04N 1/60

(54) **MODIFYING COLOR GAMUTS**
MODIFIKATION VON FARBGAMUTS
MODIFICATION DE GAMME DE COULEURS

(43) Date of publication of application: 12.04.2017
(73) Proprietor: Hewlett-Packard Development Company, L.P., Spring TX 77389 (US)
(72) Inventor: MOROVIC, Peter, E-08174 Sant Cugat del Valles (ES); SENDER BELETA, Jordi, E-08174 Sant Cugat del Valles (ES); BRUCH PLA, Xavier, E-08174 Sant Cugat del Valles (ES); MOROVIC, Jan, Colchester CO3 4SJ (GB)
(74) Representative: Haseltine Lake Kempner LLP
(86) International application number: PCT/EP2014/061865
(87) International publication number: WO 2015/185159

(56) References cited:
- EP-A2- 1 229 732
- EP-A2- 1 427 184
- US-A- 5 574 666
- US-A- 5 949 967
- US-A1- 2012 249 521

## Description

### BACKGROUND

Printers usually implement some data transformation that converts pixels in RGB, CMYK (or in any other color space) to printed objects of a given colorimetry. Such data transformation may include color mapping, i.e. mapping each color of a source color space to a color of an output color space.

EP 1427184 describes colour gamut mapping using a cost function. US2012/0249521 discloses a colour boundary information generating device and methods to generate colour gamut boundary information which specifies a three-dimensional shape in a colour space. EP 1229732 described systems and methods for printing all possible colours in equal increments at a size which is easily measurable. US 5949967 describes a method of transforming input colour values to device control signals for a colour printing device.

### SUMMARY OF INVENTION

The aspects of the invention are set out in the appended claims.

### BRIEF DESCRIPTION OF DRAWINGS

Figure 1 is an example of a method for developing a color mapping for mapping colors from a source gamut to an output gamut;
Figure 2 is an example of a printed image having a defect;
Figure 3 is a schematic representation of a printer and a processor, according to one example;
Figure 4 is a further example of method for developing a color mapping for mapping colors from a source gamut to an output gamut;
Figure 5 is a flowchart of the processing of block 408 of Figure 4 in more detail, according to one example;
Figure 6 is a schematic representation of an example of apparatus comprising a printer; and
Figures 7 and 8 are schematic representations of color mapping apparatus, according to examples.

### DETAILED DESCRIPTION

Data transformation by color mapping, i.e. mapping colors of a source color space or 'gamut' to a color gamut for producing an output image, can depend on the capabilities of an output device to represent the colors of the source gamut.

For example, the pixels of an RGB image (such as may be displayed on a computer screen) have three values, one for each of red, green and blue to specify the 'amount' of that color for that pixel. Similarly, the pixels of a CMYK image (such as may be produced by a color printer) have 4 values, relating to cyan, magenta, yellow, and 'key' (i.e. black) ink. In order to print out an image displayed on a computer screen, the RGB color space may need to be mapped on to the CMYK color space. The range of colors available in a particular color space using a particular apparatus is known as its 'color gamut'. There may be several possible mappings, which result in different visual effects and any of these may be favourable in different circumstances, for example based on the image type, intended use of the image produced or the desired visual effect.

In practice, in order to convert a source gamut to an output gamut, an intermediate, (for example, device independent), color space, such as Profile connection space (PCS) is often used under techniques proposed by the International Color Consortium (ICC): the colors of the source gamut will be mapped to the PCS, and then to the colors of the output gamut. Using such an intermediate color space, an input apparatus need only be capable of mapping colors acquired to the intermediate color space, rather than determine or hold a mapping for each output/display apparatus, and/or vice versa.

When printing images, it can be the case that printing defects (often known as 'artefacts'), i.e. unintended marks or features, appear in the printed image. Such artefacts can originate from a number of sources, and include streaks, lines, banding, spots, mottling, blurring and the like.

Some defects may be related to the printing technique employed. For example, as ink issues from a print head there may be air turbulence. In some examples, this turbulence may be particularly apparent when ink is ejected at a particular distance from a surface. This can result in defects. In other examples, defects may be seen due to changes in 'drop quality', which relates to the drop velocity and directionality of the ink as it emitted.

Some defects may be associated with a particular print head within a printer (i.e. while a particular color at a particular density may print successfully from one particular print head, another print head may produce a printing defect). Other defects may be produced at certain color densities (saturations), which correspond to certain ink or toner coverage levels. For example, in certain inks, small variations in drop weight may produce large variations in color density. In some examples this has been seen to be particularly prevalent in the mid range of coverage.

Of course, a defect may also be seen due a combination of such factors. Thus, in some examples, a defect may be associated with any, or any combination, of (i) particular saturation(s) within the color space, (ii) particular hue(s) within the color space provided by the gamut (e.g. particular ink and ink overprint combinations), (iii) particular print head(s) and/or printable area(s) of the substrate (a region of defect(s) may be related to a single printing head and/or by an area which is affected by one or more particular print head(s)).

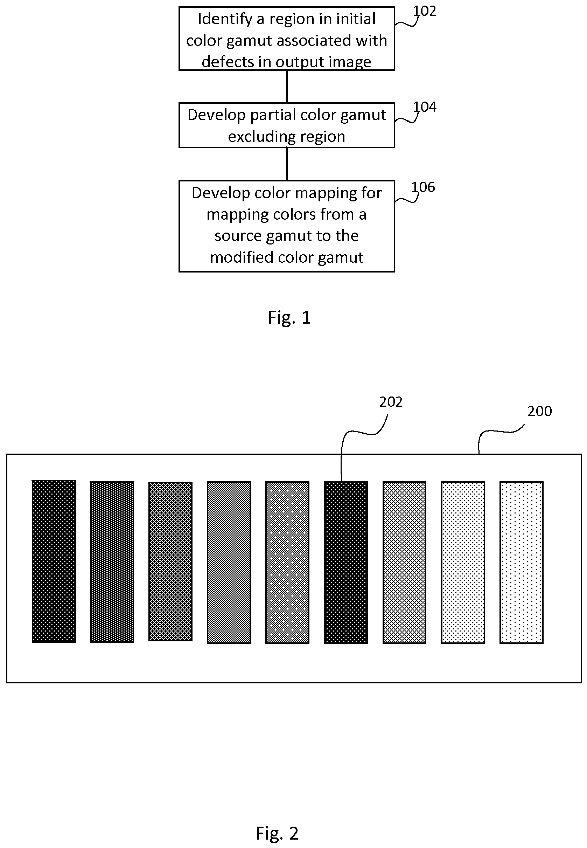

Figure 1 shows an example of a method of mapping colors from a source gamut to an output gamut. In block 102, a region in an initial color gamut associated with at least one defect in a printed output image is identified. In some examples, the step of identification may comprise analysing a printed image, or a representation thereof. In other examples, it may comprise receiving an indication of a region within the initial color gamut. In block 104, a modified color gamut is developed, which excludes the region identified in the initial color gamut, the modified output gamut comprising an outer shell of the initial output gamut which is bounded to exclude an inner region of the initial output gamut, wherein the defect lies in the inner region. Such a gamut may be referred to as a gamut description. In block 106, a map is developed to map colors from a source gamut to the modified color gamut. The source gamut may in some examples be associated with a source image or source image apparatus, or with a device independent color space.

The term 'defect' as used herein relates to printing defects, i.e. to differences between the image the printer was intended to produce and the image actually produced.

Figure 2 shows a representation of an image 200 incorporating such a defect. While the drawing is in black and white, it will be appreciated that this effect could be seen in color image, for example linked to a particular shade, or range of shades, of a particular color. Figure 2 is intended to show a test image, in which patches spanning a range of saturations of a color are printed on a substrate. The intended sequence would alter gradually from left to right in the image 200. However, one of the patches 202 interrupts this sequence, which is indicative of a misrepresentation of the intended saturation and is therefore in turn indicative of a defect in a particular region of the color gamut used to produce this image 200.

In this example, therefore, it can be seen that a defect occurs in a particular color saturation within the image 200, while other saturations print in a high quality manner. This effect may also be seen in color ranges. If therefore a modified color gamut, which excludes the regions associated with a defect in a printed output image, could be used in place of the initial color gamut used to produce the defective image 200, this could result in an image which is of a consistently higher quality.

Subsequent image outputs may therefore be created utilising a modified color gamut, developed as set out in Figure 1.

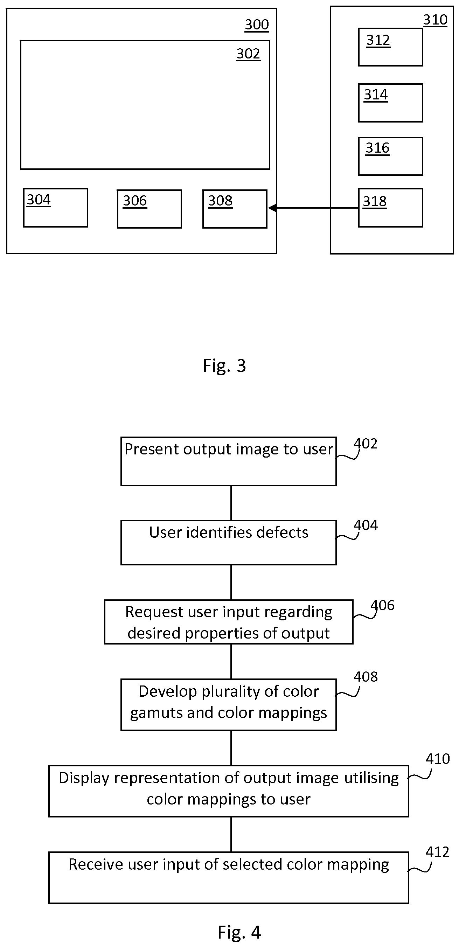

Figure 3 is a representation of a printer 300 comprising printing apparatus 302 to produce a printed output image. The printer 300 further comprises a printer mapping module 304, which, in use, maps the colors of a source gamut to an output gamut, a memory 306 to store at least one output color gamut and/or color mapping for producing an output image and a printer interface 308 for receiving data such as, or relating to, color gamuts and mappings.

The printer 300 is associated with a processor 310. The processor 310 comprises a defect identification module 312 to identify, following analysis of an output image, at least one region within a color gamut used to produce an output image which is associated with a defect. The defect identification module 312 may for example be arranged to carry out, or to receive, a sampling of an output image of the printer 300. This may for example comprise sampling the RGB (or CMYK) space and/or corresponding measured CIE XYZ or L*a*b* colorimetries.

In some examples, sampling may be carried out on a test output image, for example comprising a range of test patches, which may be arranged in a grid or the like. It will be appreciated that, in RGB space, the 'full' gamut is a cube, but a particular device will only be able to represent a portion of the full cube (or hypercube for CMYK). Therefore, printing, sampling and analysing such an output image provides an estimate of the actual color gamut of a device used to produce the output image.

The processor 310 also comprises an adaptation module 314. On detection of a defect, the adaptation module 314 adapts the initial output color gamut which results in a printed output having a defect to provide a modified output color gamut, wherein the modified output color gamut is free from the identified defect-associated region(s). The processor 310 further comprises a processor mapping module 316, which in this example is arranged to develop a mapping from a source gamut (which may be a PCS gamut) to the modified gamut, and a processor interface 318, to receive a representation of an output image (or data relating to such an output image) for analysis by the defect identification module 312 and to allow information about the modified output gamut and the associated mapping to be output such that it may be provided to the printer 300 via the interface 308.

The printer mapping module 304, on provision of information related to modified color gamut and/or mapping, maps the colors of a source gamut to the modified color gamut rather than to the initial color gamut which has the defect-associated region(s). The information may in examples comprise any, or any combination, of (i) the colors to be omitted from the modified gamut, (ii) the colors for inclusion in the modified gamut, (iii) a complete description of the modified gamut. In some examples, the printer mapping module 304 may also be arranged to determine the mapping (i.e. in place of the processor mapping module 316)

The processor 310, or any or all of the components thereof, may comprise part of the printer 300, or be provided separately. The printer 300 may comprise a processor (which may be the processor 310), which may be arranged to perform other functions, such as controlling the functioning of the printing apparatus 302, monitoring performance thereof, and the like. The interfaces 308, 318 may for example be connected by a wired or wireless connection. In one example, data may be generated by the processor 310, copied to a storage medium from the processor interface 318, then conveyed to the printer 300 and transferred thereto via the printer interface 308.

It will be appreciated that the initial color gamut may be determined by, or related to, the device intended to print the image (for example, a printer 300). A particular device may have a particular initial color gamut associated therewith.

In some examples, the initial color gamut and/or modified color gamut may be a color gamut as defined by the International Color Consortium (ICC) for the purposes of representation in an ICC profile. ICC profiles are often used in known printers, so using ICC standards may facilitate deployment in apparatus already configured to use ICC standards and interoperability of some examples disclosed herein.

In some examples, the initial color gamut may be a complete color gamut, covering the part of the color space that is natively accessible by a given device, such as a printer (all the colorimetries that a device is capable of outputting). The modified gamut may be reduced, or partial gamut compared to the initial gamut.

Figure 4 shows a further example of a method for developing a color mapping. In this example, user inputs are requested as further set out below.

An output image is presented to a user in block 402. In one example, this comprises presenting a scanned image version of a printed image to a user via a screen or other display device. In block 404, any visually apparent defective region or artefact in the printed image is identified by a user and indicated to a processor via a user interface. For example, a user may be able to interact with a display of an output image to indicate regions in which defect(s) is/are seen. In another example, a 'hard-copy' image could be marked and then scanned, with the markings being detected automatically. In still further examples, the defective regions may be identified automatically.

As in Figure 1, the method proceeds, once the defect-associated region of the initial color gamut has been identified, to determine a modified gamut to which an appropriate mapping may be made.

For example, it could be the case that a point in color space which would map to a defective region maps instead to the 'closest' point in color space which is not defective. This would result in the absolute color difference between the input and output images being minimised.

While in some examples, this may produce a satisfactory result, in other examples, simply removing a defective region from the output color gamut and/or mapping to a region which excludes the defective regions may result in undesirable results. For example, even if only a portion of the 'green' color space is defective, the closest remaining point may be in 'yellow'. However, if the image is intended to show something green, such as grass, it could be that a more distant, but still green, point in color space is more appropriate. There may be other reasons to preserve hue(s).

In another example, an image may have a color transition between two colors that are defect-free, but which passes through an area that has defects. If this region has been removed from the output gamut, a discontinuity would manifest as an 'edge' or an 'inversion' making the transition look abrupt. Such a discontinuity in the color gamut can be viewed as a concavity in color space.

Therefore, the modified gamut and/or the mapping thereto may have at least one, and in some examples, all, or a balance of, the following qualities:
1. The mapping tends to minimize color difference (i.e. map to color which is close to the region associated with a defect in a printed output image, without lying within it).
2. The mapping tends to preserve some or all hues (for example, greens should stay green, etc.)
3. The mapping tends to maintain color variety (does not collapse colors or tries to minimize this effect)

Minimising color difference by mapping to the closest available point in the modified gamut has been discussed above.

To preserve hues, hues in the source image may be identified. For example, hues may be determined as points on a 'color circle' with defined angles determining the boundaries of hues. Mappings which ensure that the corresponding region of an output image fall within the same bounded angles will result in hues being preserved. It will be noted that, in particular where a defect is associated with a particular saturation level, hue may be preserved by mapping to a different saturation level.

Color variety may be maintained by ensuring that all of a defective region is not remapped to the same color in a modified gamut. For example, if an appreciable part of the 'red' color space of an original gamut is defective, it may be that the mapping is determined to ensure that the whole of that defective region does not map to the same uniform red in the modified gamut, as might otherwise occur (and indeed is more likely to occur if the first two mapping principles out lined above are followed). Instead the defective region may be considered alongside the remaining portions, and the mapping may ensure that colors that would map to the defective region are mapped to different points in the modified gamut. This can be achieved in a variety of ways, for example, by applying compression of all colors, including those that are within the gamut of reproducible colors, in order to maintain variety. This ensures that the defective region of the original gamut does not collapse to a single uniform color in the modified, destination gamut.

In other examples, the modified gamut may be arranged to minimise or avoid discontinuities, such that those which may result in a discontinuity within color transitions, additional regions of the color gamut may also be removed, effectively minimising concavities. This may mean removing regions outside the region of the initial gamut identified as having a defect.

For example, if a defect occurs on or near the outer hull of the gamut (i.e. the region of the gamut associated with fully saturated colors), the outer hull can be 'shaved off', i.e. not all colors will be available at full colour saturation. In some examples, this could be carried out in a graduated manner in a region surrounding or adjacent to the defect, to smooth out the discontinuity. In other examples, the outer hull could be removed consistently, such that all colors have a new, reduced, maximum color saturation. In some such examples, the mapping of degrees of saturation from the source gamut could be scaled accordingly, or levels of saturation above a threshold may be mapped to the maximum saturation. This results in a modified gamut having a reduced hull compared to the initial gamut.

If a defect is in the interior of a gamut, a 'hole' in the gamut may be created. These 'holes' can be localized (for example, only mid-level blues show defects) or global (for example, all mid-level colors show defects).

If the defect is local, using the closest point in color space (possibly with the added constrictions that hue and/or color variety is preserved, for example by ensuring that the output color falls with the bounds marking the hue, and/or by changing the color saturation) may be a satisfactory result.

If the defect is global, this may result in an outer shell (in one example, this may be a region of full to mid-level saturation colors that are defect free) and an inner hull (e.g. a region of mid-level to low-level saturation colors that are also defect free) and an intermediate 'layer' that results in defects. If this is the case, it is possible to map problem colors (in the mid-level) to the outer shell (to continue the example, effectively boosting their saturation) or to the inner hull (e.g. reducing their saturation). However, if both mappings are used for a single output image, this could result in a discontinuity. Therefore, a mapping (or a mapping for an effected region of the image) may be selected to map only to the inner or outer regions, effectively reducing the modified gamut to just one of these regions.

The selection of which region should be used may be made considering various factors. For example, mapping to the outer shell may be a preferred option for 'point-of-sale' or other signage type content where a high saturation effect is desired. In another examples, the region which encloses the largest color space may be preferred, as it may better preserve variety in the image.

Although this has been discussed in relation to example of color saturation above, the same considerations could be applied to any, or any combination of parameters within the color space provided by the initial output gamut. In summary therefore, in some examples, the modified gamut may comprise one or both of (i) an inner hull of the initial output gamut, the defect being in a region of color space lying outside the inner hull; and (ii) an outer shell of the initial output gamut, bounded to exclude an inner region, wherein the defect lies in the inner region.

In some examples, the inner hull may be arranged to be at least one of (and in some examples all of) convex, continuous and artefact free (i.e. free from defective regions). In further examples, the inner hull may be arranged to comprise the largest volume of color space that is at least one, and in some examples all, of convex, continuous and free from defective regions.

As noted above, the outer shell is bounded to exclude an inner region. In some examples, the inner region is such that it is the smallest volume of color space of the initial color gamut which includes all defective regions, and is convex and continuous.

The outer shell may be discontinuous and have concavities, but may nevertheless be preferred in some examples as it allows for images including outer regions of a gamut (for example, high color saturation images) to be produced.

Restricting the mapping to such shells or a reduced hull may be a relatively simple computational process when compared to techniques for excluding a local 'hole' in an initial color gamut. It may, for example, allow for mapping principles to be applied globally. Gamuts with at least one hole or concavity (i.e. at least one discontinuity) may require mappings in the region of a discontinuity to be identified and processed using different principles than those applied in other regions, complicating the processing task. Therefore, in some examples, it may be preferred to effectively treat a local defect (e.g. a defect in particular hue at a particular saturation) as a global defect, (e.g. remove all hues at that saturation from the modified color gamut) as this may result in a simpler processing task.

As noted above, where both inner hull and the outer shell are maintained in the modified gamut, a mapping may be arranged to map to only one of these regions to produce a particular output image. In some examples, this may be the case where an image has transitions, and if the transitions would span a defect region. This may mean that a choice is made to map the colors which otherwise have mapped to an outer region to the inner region, or vice versa, in effect restricting the modified gamut to just one of these regions. This may provide smooth transitions, possibly at the cost of loss of a region of color space which is not affected by a defect. Similarly, the effect of a hole, or a concavity, with regard to transitions may be reduced by sacrificing a region around that hole, for example treating it as a global defect as mentioned above, or removing the outer reaches of the color gamut until the concavity is reduced or removed.

Therefore, the modified output gamut may also exclude non-defective regions. In some examples, this may be the case if mapping to such non-defective regions would cause an undesirable effect, such as a color transition discontinuity.

In one example, the modified color gamut comprises only regions from the initial color gamut which are continuous once the defect-associated region has been excised. This may mean that the modified gamut is comparatively small (since in this example it is required to be continuous). However, in some circumstance this may provide a satisfactory result, and may reduce the complexity of mapping tasks. For example, it may preferred to sacrifice saturation in favour of a defect-free image output.

If, however, the image output is intended to show color transitions (for example, a photograph, or graphic image) alternative mappings may be considered. In one example, if there are no area fills with problem colors in the output image (even if problem colors do occur in the image), an option would be to use a form of 'automatic' color personalization.

Color personalization refers to a process to allow a user make changes to one or more user selected colors to produce a desired effect. This may comprise reviewing the 'before' and 'after' images of the color to be altered to extrapolate what alterations to a color Look-Up Table would have to be made in order for the change introduced by the user to be reproduced in a displayed or printed output image.

In a variation to such a process, however, defective colors could be identified and replaced. Instead of using a color which is close to the original, a color which maintains look up table smoothness could be chosen. Lookup-table smoothness is understood to be a property whereby each node of a look up table is surrounded by nodes that monotonically change color attributes such as lightness, hue and chroma, thus overall resulting in smooth transitions from any node to any other node.

Other factors may influence the desirability of a particular mapping/modified gamut. For example, the actual mapping used may be determined with consideration of content type (for example, how is the output image to be displayed or viewed and/or what is its purpose; is the source/output image high contrast or intended to show detailed color transitions) and/or user preference.

To that end, in block 406, a user is presented with an option to indicate desired attribute(s) of the printed image. These attributes may for example relate to any or all of the image type, intended use of the output image, the intended visual effect of the image, and/or user preference.

In one example a user may be able to choose between 'full gamut' and 'minimum artefacts'. The first choice may result in an image with more defects, but may have a larger range of colors, whereas the second choice may have less, or even no, defects, while being less faithful to the originally intended colors. Alternatively or additionally, the user may be able to indicate whether any or all hues should be preserved, whether a high or low saturation output is preferred, and/or whether smooth transitions in an image should be preserved.

Once appropriate user preferences have been indicated, in block 408, a plurality of color gamuts and color mappings are produced. These may present variations in visual appearance and may, for example, differ in terms of the priorities assigned to user preferences should these contradict.

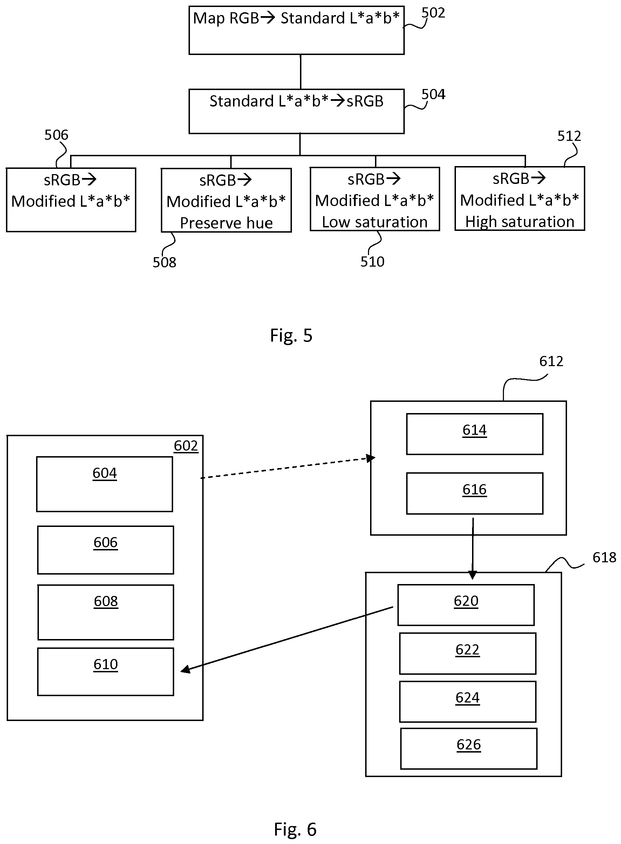

Figure 5 describes an example of block 408 in more detail. In this example, the input image is in RGB color space, having a known mapping to a standard device independent L*a*b* color space (block 502). A modified (defect free) color gamut has been determined for the device, and this is also expressed as a L*a*b* color space. In this example, rather than creating a new mapping from the standard L*a*b* to the modified L*a*b*, a first mapping from the standard L*a*b* to so called standard color space, or sRGB is created (block 504). This mapping may be a standard mapping and reduces the color space to one which is realistically likely to be seen in the input image.

Alternative mappings from sRGB to the modified L*a*b* are then computed. In this example, the user has indicated that hues and smoothness of transitions should be preserved

In a first mapping, the colors are mapped to the closest available point in color space (block 506). In a second mapping, the colors are mapped to the closest available point in color space, given the additional requirement that hues are preserved (block 508). Such an mapping may result in an image having colors which are more distant from the source image than if the mapping produced in block 506 is used, but the hues will stay faithful to the original image (e.g. a blue sky will remain blue). In a third mapping, the colors are mapped to the closest available point in an inner hull continuous color space (block 510). This will produce a relatively low saturation image in which the smoothness of transitions are preserved. In a fourth mapping, the colors are mapped to the closest available point in an outer shell of color space (block 512). This will produce a relatively high saturation image in which the smoothness of transitions are preserved.

In block 410, images using the alternative color mappings to one or more modified color gamuts are presented to a user to allow, in block 412, user selection thereof. Such presentation may comprise displaying representations electronically, for example on a screen, or printing images, or the like.

In some examples, a mapping to the original color gamut of the device may also be presented to a user in block 410, even though it may include defects. It will be appreciated that, as the method in this example results in a restriction of the colors available, this method may not be suitable for all images, particularly if the modified gamut(s) is/are too restrictive to produce an output image of satisfactory quality. Therefore, even if it contains defects, the original gamut may still provide the preferred visual effect. Further additional mappings, including mappings which preserve both the hues and smoothness of transitions, may be presented.

In yet another example, the gamut(s) and/or mapping(s) may be selected automatically. The mapping(s) may be selected based on analysis of, or characteristics of, the image to be printed. For example, a particular image may contain colors which lie in a gamut which has minimal, or no, gamut differences compared to one of the possible mappings. Alternatively, the image may have no transitions (or no transitions across defective regions), thus it may be of less significance to reduce the gamut to ensure it is continuous. As a further alternative, if an image is predominantly of high-saturation, a gamut which preserves such saturation may be selected. Alternatively or additionally, the gamut(s) which preserves the highest volume of color space (or the mapping(s) which access the highest volume of color space) while avoiding discontinuities may be used. Other factors may alternatively or additionally be considered.

The methods described herein may be provided in conjunction with other methods for improving image quality, and/or presented to the user as one of a plurality of image adjustment options.

Figure 6 shows a representation of apparatus comprising a printer 602. The printer 602 comprises printing apparatus 604 arranged to produce a printed image. The printer 602 further comprises a processor 606, a memory 608 and an interface 610.

The apparatus also comprises a scanner 612, comprising an image capture module 614 to capture an image of an output printed article. The scanner 612 comprises an interface 616, arranged to pass the image to a computing apparatus 618.

The computing apparatus 618 comprises an interface 620 to allow it communicate with the scanner 612 and the printer 602. It further comprises a screen 622 arranged, among other uses, to display the image from the scanner 612. A user interface 624 is also provided, which allows a user to interact with the content displayed on the screen. For example, a user may control the position of a curser overlaid on other screen images to select menu items, change the display, indicate the presence of defects in an image, indicate preferences and/or desired output image attributes. Further, the computing apparatus 618 comprises processing circuitry 626.

The computing apparatus 618 may comprise a computer such as a laptop computer, desktop computer, tablet, smart phone or the like, and may be connected in a wired or wireless manner with a printer. Alternatively, data could be transferred to a physical medium and transferred from the computing apparatus 618 and the printer 602 and/or scanner 612.

In other examples, some or all of the components of the computing apparatus 618 may be physically part of the printer 602, and be controlled by (and may provide inputs to) the processor 606. Similarly, any or all components of the scanner 614 may be part of the printer 602 and/or the computing apparatus 618.

One-pass printers are generally quicker than multi-pass printers (i.e. they have a higher throughput rate) but can be more expensive. They can also suffer more from persistent printing defects due to an inherent lack of redundancy. While a multi-pass printer can access a spatial location on a substrate multiple times, a one-pass printer can do so only once. Thus any defect that is caused by any one of the print heads or the nozzles thereon cannot be compensated for by additional passes. A variety of phenomena affect the stability of ink on a substrate, including environmental conditions, air-flow issues and dependencies on the distance to the substrate especially in non-contact printing such as ink-jet where the print head is some distance away from the substrate, firing ink droplets at high speed. This then also depends on the amounts of ink fired which in turn can result in artefacts that depend on coverage (amount of ink) and also on specific inks (due to differences in individual drop-weights).

While this can be ameliorated to some extent by operating such a printer in 'multi-pass' mode, this reduces the throughput rate and, in any event, a multi-pass mode may not be supported by one-pass printers.

Therefore, in some examples of the present invention, the methods described herein may be carried out by the processor of a one-pass inkjet printer.

The processor 606 and/or processing circuitry 626 may comprise a color mapping module, a defect identification module, and an adaptation module, which in some examples may be as described in relation to Figure 3 and may have access to a memory.

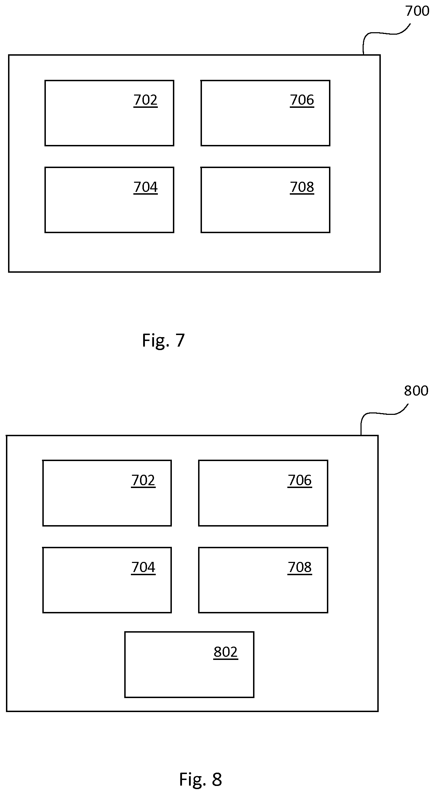

An example of a color mapping apparatus 700 as shown in Figure 7 comprises a memory 702, a defect identification module 704, an adaptation module 706, and color mapping module 708.

The memory 702 is to store a color gamut for producing an output image. The defect identification module 704 is to identify, from a printed output image, at least one region within the initial output color gamut being associated with a defect in the output image. The adaptation module 706 is to, on detection of a defect, adapt the initial output color gamut to provide a modified output color gamut, wherein the modified output color gamut is free from region(s) associated with a defect in the output image.

The color mapping module 708 is to map the colors of a source image to colors for an output image based on a source color gamut and an output color gamut. In addition, on detection of a defect, the color mapping module 708 is to map the colors of the source gamut to colors for an output image based on the modified output gamut.

In some examples, a region of the initial color gamut associated with a defect in a printed output image may be identified automatically, by measurement. Figure 8 shows a further example of color mapping apparatus 800 which comprises, in addition to the features described in relation to Figure 7, image analysis apparatus 802 to analyse a printed output image and provide an input to the defect identification module 704.

The defect identification module 704 is adapted to identify, based on the analysis carried out by the image analysis apparatus 802, at least one region within the output color gamut which is associated with a defect in an output gamut as discovered in a printed image and the adaptation module 706 thereafter adapts the initial output color gamut to provide at least one modified output color gamut, which modified output color gamut is free from defect-associated region(s).

The image analysis apparatus 802, in this example, compares data relating to an image (for example, a scanned copy or color measurements of individual color patches by means of a spectrophotometer or colorimeter) of a printed output image to expected data held in the memory 702. In some examples, this expected data is based on or generated from a source gamut. In one example, an electronic source image may have been operated on to map the colors of the source image to the initial color gamut to provide expected data. Differences between the data relating to the image of the printed output to an expected data may be labelled as artefacts.

In an alternative or additional example, multiple instantiations of the same digital input (e.g. data relating to multiple images intended to be the same) may be compared and differences between such instantiations be labelled as artefacts. As a further alternative or additional example, data relating to different portions of a single image, where the portions are intended to show the same color may be compared, and any difference detected may result in that color being labelled as being associated with printing artefacts. These differences may comprise differences in factors such as hue, image sharpness, color density and/or other factors. Artefacts which can be associated with a particular region of the initial color gamut are identified as defects. This may comprise quantisation of a color difference. Such a measure may, by way of example, be one defined by the International Commission on Illumination (CIE), such as CIEDE2000.

In one example this process takes place off-line during the design and computation of color resources for a given printer. This may for example be part of an initialisation and/or quality check of the printer. For example, some defects may be remedied by replacing or repairing parts, while other defects may be remedied by producing a modified output gamut as set out herein. In another example this process may be carried out in relation to an in-service printer, for example to respond to a printer's given state. In such cases, it could, for example, be triggered automatically after routine processes such as calibration determine an issue, or triggered by an operator, for example, following observation of poor performance. Part of the calibration process in such examples may involve the printing and visual inspection of a test image having an appropriate content to verify parts (or all) of a printer's color gamut. For example, this may comprise printing test patches of colors distributed throughout the color gamut.

Some of the examples described herein comprise taking an initial color gamut (which in some examples is the 'native' color gamut associated with a printing apparatus), and labelling areas thereof as defect (for example, artefact) prone. The identification of such areas may be by measurement (i.e. automatic) or by user input. A color gamut mapping to a modified (e.g. reduced) color gamut from the initial gamut may be used to reduce printing artefacts seen as defects. This may in turn result in an increase in print and/or inking and/or visual quality in an output image. The cost of this approach may be a more liberal departure from the original color content but this may be a satisfactory outcome.

Examples in the present disclosure can be provided as methods, systems or machine readable instructions, such as any combination of software, hardware, firmware or the like. Such machine readable instructions may be included on a computer readable storage medium (including but is not limited to disc storage, CD-ROM, optical storage, etc.) having computer readable program codes therein or thereon.

The present disclosure is described with reference to flow charts and/or block diagrams of the method, devices and systems according to examples of the present disclosure. It shall be understood that each flow and/or block in the flow charts and/or block diagrams, as well as combinations of the flows and/or diagrams in the flow charts and/or block diagrams can be realized by machine readable instructions.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus the functional modules or functional units of the apparatus and devices may be implemented by a processor executing machine readable instructions stored in a memory, or a processor operating in accordance with instructions embedded in logic circuitry. The terms 'processor' and 'processing circuitry' is to be interpreted broadly to include a CPU, processing unit, ASIC, logic unit, or programmable gate array etc. The methods and functional modules may all be performed by a single processor or divided amongst several processers.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operation steps to produce computer-implemented processing, thus the instructions executed on the computer or other programmable devices provide a step for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

Although the flow diagrams described above show a specific order of execution, the order of execution may differ from that which is depicted. Blocks described in relation to one flow chart may be combined with those of another flow chart.

## Claims

1. A computer implemented method for determining a color mapping for mapping colors from a source gamut to an output gamut of a printer (300, 602), the method comprising:
identifying, in an initial output gamut of the printer (300, 602), a region of the initial output gamut which is associated with a defect in an output image (200) printed by the printer (300, 602);
modifying the initial output gamut to produce a modified output gamut for the printer (300, 602), the modified output gamut comprising an outer shell of the initial output gamut which is bounded to exclude an inner region of the initial output gamut, wherein the identified region which is associated with the defect lies in the inner region;
determining the color mapping which maps the colors from the source gamut to the modified output color gamut for producing a printed output image (200) using the printer (300, 602).

2. A method according to claim 1 in which the color mapping is determined to minimize color difference between the initial color gamut and the modified output color gamut.

3. A method according to claim 1 in which the color mapping is determined to maintain color variety such that at least two colors that are distinct from one another in the source gamut are also distinct from one another in the modified gamut.

4. A method according to claim 1 in which the color mapping is determined to preserve at least one hue of the source gamut in the output image (200).

5. A method according to claim 1 in which the modified output gamut is continuous and excludes further regions in addition to the identified region.

6. A method according to claim 1 in which the modified gamut further comprises an inner hull of the initial output gamut, the defect being in a region of the original output gamut lying outside the inner hull.

7. A method according to claim 1 which comprises determining at least one desired attribute of the output image (200) and in which the color mapping is determined according to the desired attribute.

8. A method according to claim 7 which comprises determining a plurality of color mappings, and using one of the plurality of color mappings to map colors from the source gamut to the modified output color gamut for producing an output image (200) depending on the desired attribute.

9. A method according to claim 1 which comprises accepting a user input and at least one of identifying the region associated with a defect in a printed output image (200) and determining a color mapping is carried out based on user input.

10. Color mapping apparatus (700, 800) comprising:
a color mapping module (708) to map colors of a source image (200) to colors for an output image (200) to be printed by a printer (300, 602) based on a source color gamut and an output color gamut of the printer (300, 602);
a memory to store a color gamut for producing an output image (200);
a defect identification module (312, 704) to identify, from an output image (200) printed by the printer (300, 602), at least one region within an initial output color gamut for the printer (300, 602), the identified region being associated with a defect in an output image (200),
an adaptation module (314, 706) to, on identification of a defect, adapt the initial output color gamut to provide a modified output color gamut for the printer (300, 602), wherein the modified output color gamut comprises an outer shell of the initial output gamut which is bounded to exclude an inner region of the initial output color gamut, and wherein the identified region which is associated with the defect lies in the inner region;
and wherein the color mapping module (708) is, on identification of a defect, to map the colors of the source image (200) to the modified output color gamut.

11. Color mapping apparatus (700, 800) according to claim 10 which comprises a printer (300, 602) to produce a printed output image (200).

12. Color mapping apparatus (700, 800) according to claim 10 which comprises a user interface (624) arranged to accept a user input, wherein said user input is used by at least one of the defect identification module (312, 704) and the color mapping module (708).

13. Color mapping apparatus (700, 800) according to claim 10 which comprises image analysis apparatus (802) to analyse a printed output image (200) and provide an input to the defect identification module (312, 704).

14. One or more computer-readable storage media comprising instructions stored thereon which, when executed, direct a processor (310, 606) to:
determine a color map which maps colors in a source gamut to a modified color gamut of a printer (300, 602), wherein the modified color gamut is based on an initial color gamut for the printer (300, 602) having at least one color gamut region associated with a defect in an output image (200) printed by the printer (300, 602), and the modified color gamut comprises an outer shell of the initial output gamut which is bounded to exclude an inner region of the initial output gamut, and wherein the color gamut region which is associated with the defect lies in the inner region.

15. One or more computer-readable storage media according to claim 14 in which the instructions stored thereon, when executed, direct a processor (310, 606) to:
present a plurality of alternative color mappings to a user and
receive user input to identify a selected color mapping.

## Patentansprüche

1. Computerimplementiertes Verfahren zum Bestimmen einer Farbabbildung zum Abbilden von Farben von einem Quellraum auf einen Ausgaberaum eines Druckers (300, 602), wobei das Verfahren Folgendes umfasst:
Identifizieren, in einem anfänglichen Ausgaberaum des Druckers (300, 602), eines Bereichs desanfänglichen Ausgaberaums, der einem Fehler in einem Ausgabebild (200) zugeordnet ist, das von dem Drucker (300, 602) gedruckt ist;
Modifizieren des anfänglichen Ausgaberaums, um einen modifizierten Ausgaberaum für den Drucker (300, 602) zu erzeugen, wobei der modifizierte Ausgaberaum eine Außenhülle des anfänglichen Ausgaberaums umfasst, die begrenzt ist, um einen inneren Bereich des anfänglichen Ausgaberaums auszuschließen, wobei der identifizierte Bereich, der dem Fehler zugeordnet ist, im inneren Bereich liegt;
Bestimmen der Farbabbildung, die die Farben vom Quellraum auf den modifizierten Ausgabefarbraum abbildet, um unter Verwendung des Druckers (300, 602) ein gedrucktes Ausgabebild (200) zu erzeugen.

2. Verfahren nach Anspruch 1, bei dem die Farbabbildung bestimmt wird, um die Farbdifferenz zwischen dem anfänglichen Farbraum und dem modifizierten Ausgabefarbraum zu minimieren.

3. Verfahren nach Anspruch 1, bei dem die Farbabbildung bestimmt wird, um die Farbvielfalt aufrechtzuerhalten, so dass mindestens zwei Farben, die sich im Quellraum voneinander unterscheiden, sich auch im modifizierten Raum voneinander unterscheiden.

4. Verfahren nach Anspruch 1, bei dem die Farbabbildung bestimmt wird, um mindestens einen Farbton des Quellraums im Ausgangsbild (200) zu erhalten.

5. Verfahren nach Anspruch 1, bei dem der modifizierte Ausgaberaum kontinuierlich ist und neben dem identifizierten Bereich weitere Bereiche ausschließt.

6. Verfahren nach Anspruch 1, bei dem der modifizierte Raum ferner eine Innenhülle des anfänglichen Ausgaberaums umfasst, wobei der Fehler in einem Bereich des ursprünglichen Ausgaberaums liegt, der außerhalb der Innenhülle liegt.

7. Verfahren nach Anspruch 1, umfassend das Bestimmen mindestens eines gewünschten Attributs des Ausgabebildes (200) und bei dem die Farbabbildung gemäß dem gewünschten Attribut bestimmt wird.

8. Verfahren nach Anspruch 7, umfassend das Bestimmen einer Vielzahl von Farbabbildungen und das Verwenden einer der Vielzahl von Farbabbildungen zum Abbilden von Farben aus dem Quellraum auf den modifizierten Ausgabefarbraum zum Erzeugen eines Ausgabebildes (200) in Abhängigkeit vom gewünschten Attribut.

9. Verfahren nach Anspruch 1, umfassend das Annehmen einer Benutzereingabe und mindestens eines von dem Identifizieren des Bereichs, der einem Fehler in einem gedruckten Ausgabebild (200) zugeordnet ist, und dem Bestimmen, dass eine Farbabbildung basierend auf einer Benutzereingabe durchgeführt wird.

10. Farbabbildungsvorrichtung (700, 800), die Folgendes umfasst:
ein Farbabbildungsmodul (708) zum Abbilden von Farben eines Quellbildes (200) auf Farben für ein Ausgabebild (200), das von einem Drucker (300, 602) basierend auf einem Quellfarbraum und einem Ausgabefarbraum des Druckers (300, 602) zu drucken ist;
einen Speicher zum Speichern eines Farbraums zum Erzeugen eines Ausgabebildes (200);
ein Fehleridentifikationsmodul (312, 704), um aus einem vom Drucker (300, 602) gedruckten Ausgabebild (200) mindestens einen Bereich innerhalb eines anfänglichen Ausgabefarbraums für den Drucker (300, 602) zu identifizieren, wobei der identifizierte Bereich einem Fehler in einem Ausgabebild (200) zugeordnet ist,
ein Anpassungsmodul (314, 706), um bei der Identifizierung eines Fehlers den anfänglichen Ausgabefarbraum anzupassen, um einen modifizierten Ausgabefarbraum für den Drucker (300, 602) bereitzustellen, wobei der modifizierte Ausgabefarbraum eine Außenhülle des anfänglichen Ausgaberaums umfasst, die begrenzt ist, um einen inneren Bereich des anfänglichen Ausgabefarbraums auszuschließen, und wobei der identifizierte Bereich, der dem Fehler zugeordnet ist, im inneren Bereich liegt;
und wobei das Farbabbildungsmodul (708) bei der Identifizierung eines Fehlers die Farben des Quellbildes (200) auf den modifizierten Ausgabefarbraum abbildet.

11. Farbabbildungsvorrichtung (700, 800) nach Anspruch 10, die einen Drucker (300, 602) zum Erzeugen eines gedruckten Ausgabebildes (200) umfasst.

12. Farbabbildungsvorrichtung (700, 800) nach Anspruch 10, die eine Benutzerschnittstelle (624) umfasst, die angeordnet ist, um eine Benutzereingabe anzunehmen, wobei die Benutzereingabe von mindestens einem der Fehleridentifikationsmodule (312, 704) und dem Farbabbildungsmodul (708) verwendet wird.

13. Farbabbildungsvorrichtung (700, 800) nach Anspruch 10, die eine Bildanalysevorrichtung (802) zum Analysieren eines gedruckten Ausgabebildes (200) und zum Bereitstellen einer Eingabe für das Fehleridentifikationsmodul (312, 704) umfasst.

14. Ein oder mehrere computerlesbare Speichermedien, die darauf gespeicherte Anweisungen umfassen, die bei Ausführung einen Prozessor (310, 606) anweisen zum:
Bestimmen einer Farbabbildung, die Farben in einem Quellraum auf einen modifizierten Farbraum eines Druckers (300, 602) abbildet, wobei der modifizierte Farbraum auf einem anfänglichen Farbraum für den Drucker (300, 602) mit mindestens einem Farbraumbereich basiert, der einem Fehler in einem vom Drucker (300, 602) gedruckten Ausgabebild (200) zugeordnet ist, und der modifizierte Farbraum eine Außenhülle des anfänglichen Ausgaberaums umfasst, die begrenzt ist, um einen inneren Bereich des anfänglichen Ausgaberaums auszuschließen, und wobei der dem Fehler zugeordnete Farbraumbereich im inneren Bereich liegt.

15. Ein oder mehrere computerlesbare Speichermedien nach Anspruch 14, in denen die darauf gespeicherten Anweisungen, wenn sie ausgeführt werden, einen Prozessor (310, 606) anweisen zum:
Darstellen einer Vielzahl von alternativen Farbabbildungen für einen Benutzer und Empfangen von Benutzereingaben, um eine ausgewählte Farbabbildung zu identifizieren.

## Revendications

1. Procédé mis en œuvre par ordinateur pour déterminer un mappage de couleurs pour mapper des couleurs d'une gamme source à une gamme de sortie d'une imprimante (300, 602), le procédé comprenant :
l'identification, dans une gamme de sortie initiale de l'imprimante (300, 602), d'une région de la gamme de sortie initiale qui est associée à un défaut dans une image de sortie (200) imprimée par l'imprimante (300, 602) ;
la modification de la gamme de sortie initiale pour produire une gamme de sortie modifiée pour l'imprimante (300, 602), la gamme de sortie modifiée comprenant une enveloppe externe de la gamme de sortie initiale qui est délimitée pour exclure une région interne de la gamme de sortie initiale, la région identifiée qui est associée au défaut étant située dans la région interne ;
la détermination du mappage de couleurs qui mappe les couleurs de la gamme source sur la gamme de couleurs de sortie modifiée pour produire une image de sortie imprimée (200) à l'aide de l'imprimante (300, 602).

2. Procédé selon la revendication 1 dans lequel le mappage de couleurs est déterminé pour minimiser une différence de couleur entre la gamme de couleurs initiale et la gamme de couleurs de sortie modifiée.

3. Procédé selon la revendication 1 dans lequel le mappage de couleurs est déterminé pour maintenir une variété de couleurs de telle sorte qu'au moins deux couleurs qui sont distinctes l'une de l'autre dans la gamme source sont également distinctes l'une de l'autre dans la gamme modifiée.

4. Procédé selon la revendication 1 dans lequel le mappage de couleurs est déterminé pour conserver au moins une teinte de la gamme source dans l'image de sortie (200).

5. Procédé selon la revendication 1 dans lequel la gamme de sortie modifiée est continue et exclut d'autres régions en plus de la région identifiée.

6. Procédé selon la revendication 1 dans lequel la gamme modifiée comprend en outre une coque interne de la gamme de sortie initiale, le défaut se trouvant dans une région de la gamme de sortie d'origine située à l'extérieur de la coque interne.

7. Procédé selon la revendication 1 comprenant la détermination d'au moins un attribut souhaité de l'image de sortie (200) et dans lequel le mappage de couleurs est déterminé selon l'attribut souhaité.

8. Procédé selon la revendication 7 comprenant la détermination d'une pluralité de mappages de couleurs, et l'utilisation d'un mappage parmi la pluralité de mappages de couleurs pour mapper des couleurs de la gamme source sur la gamme de couleurs de sortie modifiée pour produire une image de sortie (200) en fonction de l'attribut souhaité.

9. Procédé selon la revendication 1 comprenant l'acceptation d'une entrée d'utilisateur et l'identification de la région associée à un défaut dans une image de sortie imprimée (200) et/ou la détermination du fait qu'un mappage de couleurs est effectué sur la base d'une entrée utilisateur.

10. Appareil de mappage de couleurs (700, 800) comprenant :
un module de mappage de couleurs (708) pour mapper des couleurs d'une image source (200) sur des couleurs pour une image de sortie (200) à imprimer par une imprimante (300, 602) sur la base d'une gamme de couleurs source et d'une gamme de couleurs de sortie de l'imprimante (300, 602) ;
une mémoire pour stocker une gamme de couleurs pour produire une image de sortie (200) ;
un module d'identification de défaut (312, 704) pour identifier, à partir d'une image de sortie (200) imprimée par l'imprimante (300, 602), au moins une région à l'intérieur d'une gamme de couleurs de sortie initiale pour l'imprimante (300, 602), la région identifiée étant associée à un défaut dans une image de sortie (200), un module d'adaptation (314, 706) pour, lors de l'identification d'un défaut, adapter la gamme de couleurs de sortie initiale pour fournir une gamme de couleurs de sortie modifiée pour l'imprimante (300, 602), dans lequel la gamme de couleurs de sortie modifiée comprend une enveloppe externe de la gamme de sortie initiale qui est délimitée pour exclure une région interne de la gamme de couleurs de sortie initiale, et dans lequel la région identifiée qui est associée au défaut se situe dans la région interne ;
et dans lequel le module de mappage couleur (708) doit, lors de l'identification d'un défaut, mapper les couleurs de l'image source (200) sur la gamme de couleurs de sortie modifiée.

11. Appareil de mappage de couleurs (700, 800) selon la revendication 10 comprenant une imprimante (300, 602) pour produire une image de sortie imprimée (200).

12. Dispositif de mappage de couleurs (700, 800) selon la revendication 10 comprenant une interface utilisateur (624) agencée pour accepter une entrée d'utilisateur, dans lequel ladite entrée d'utilisateur est utilisée par le module d'identification de défaut (312, 704) et/ou le module de mappage de couleurs (708).

13. Dispositif de mappage couleur (700, 800) selon la revendication 10, qui comprend un appareil d'analyse d'image (802) pour analyser une image de sortie imprimée (200) et fournir une entrée au module d'identification de défaut (312, 704).

14. Un ou plusieurs supports de stockage lisibles par ordinateur comprenant des instructions stockées sur ceux-ci qui, une fois exécutées, conduisent un processeur (310, 606) à :
déterminer une carte de couleur qui mappe des couleurs dans une gamme source sur une gamme de couleurs modifiée d'une imprimante (300, 602), la gamme de couleurs modifiée étant basée sur une gamme de couleurs initiale pour l'imprimante (300, 602) ayant au moins une région de gamme de couleurs associée à un défaut dans une image de sortie (200) imprimée par l'imprimante (300, 602), et la gamme de couleurs modifiée comprenant une enveloppe externe de la gamme de sortie initiale qui est délimitée pour exclure une région interne de la gamme de sortie initiale, et la région de gamme de couleurs qui est associée au défaut se situant dans la région interne.

15. Un ou plusieurs supports de stockage lisibles par ordinateur selon la revendication 14 dans lesquels les instructions stockées sur ceux-ci, lors de leur exécution, conduisent un processeur (310, 606) à :
présenter une pluralité de mappages de couleurs alternatifs à un utilisateur et
recevoir une entrée d'utilisateur pour identifier un mappage de couleurs sélectionné.
